# EUROPÄISCHE PATENTSCHRIFT

(11) **EP 0 356 770 B1**
(45) Veröffentlichungstag und Bekanntmachung des Hinweises auf die Patenterteilung: **23.06.1993**
(21) Anmeldenummer: 89114702.7
(22) Anmeldetag: 09.08.1989
(51) Int. Cl.: A01C 17/00

(54) **Zentrifugaldüngerstreuer**
Spinning fertilizer distributors
Distributeurs centrifuges d'engrais

(30) Priorität: 30.08.1988 DE 3829383
(43) Veröffentlichungstag der Anmeldung: 07.03.1990
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-4507 Hasbergen (DE)

(56) Entgegenhaltungen:
- EP-A- 0 160 321
- DE-B- 1 180 562
- DE-B- 2 010 863
- DE-B- 2 835 011
- FR-A- 1 400 911
- Prospekt AMAZONE ZA-U mit Druckvermerk D536688

## Beschreibung

Die Erfindung betrifft einen Zentrifugaldüngerstreuer gemäß des Oberbegriffes des Patentanspruches 1.

Durch die deutsche Auslegeschrift 11 80 562 ist ein Zentrifugaldüngerstreuer zum Anbau an den Dreipunktkraftheber eines Ackerschleppers bekannt. Dieser Zentrifugaldüngerstreuer weist einen Vorratsbehälter, Rahmen, um aufrechte Achsen angetrieben und mit Wurfelementen besetzte Schleuderscheiben auf, welche auf ihrer dem Schlepper zugewandten Seite von einem am Rahmen angeordneten Schutz- und/oder Leitschirm umgeben sind. Durch diesen Schutz- und/oder Leitschirm wird zunächst gewährleistet, daß kein Dünger zum Schlepper von den Schleuderscheiben abgeschleudert wird. Des weiteren kommt diesem Schutz- und Leitschirm auch eine Leitfunktion der von den Schleuderscheiben abgeschleuderten Düngemittelpartikel zu, so daß ein gleichmäßiges Streubild im Zusammenwirken zwischen dem Schutz- und Leitschirm und den auf den Schleuderscheiben angeordneten Wurfelementen erreicht wird.

Durch die deutsche Auslegeschrift 28 35 011 ist ein Zentrifugaldüngerstreuer bekannt, der an den Dreipunktkraftheber eines Ackerschleppers angebaut werden kann. Dieser Zentrifugaldüngerstreuer weist einen Vorratsbehälter, Rahmen, um aufrechte Achsen angetriebene und mit Wurfelementen besetzte, auswechselbare Schleuderscheiben auf, welche auf ihrer dem Schlepper zugewandten Seite von einem am Rahmen angeordneten Schutz- und/oder Leitschirm (Fig. 7) umgeben sind. Durch diesen Schutz- und/oder Leitschirm wird gewährleistet, daß kein Dünger in Richtung des Schleppers abgeschleudert wird. Des weiteren kommt diesem Schutz- und/oder Leitschirm die Aufgabe zu, die von den Wurfelementen abgeschleuderten Düngemittelpartikel im Bereich des Schirmes so zu leiten, daß sie wieder von den Wurfelementen mitgenommen werden und dann im hinteren und seitlichen Bereich abgeschleudert werden, so daß eine gleichmäßige Düngerverteilung erreicht wird.

Des weiteren ist durch den Prospekt Amazone ZA-U mit Druckvermerk D 536*6.88 ein Zentrifugaldüngerstreuer zum Anbau an den Dreipunktkraftheber eines Ackerschleppers bekannt. Dieser Zentrifugaldüngerstreuer weist einen Vorratsbehälter, Rahmen, um aufrechte Achsen angetriebene und mit Wurfelementen besetzte und auswechselbare Schleuderscheiben auf, welche auf ihrer dem Schlepper zugewandten Seite von einem am Rahmen mittels lösbarer Verbindungselemente, wie Schrauben, angeordneten Schutz- und/oder Leitschirm umgeben sind. Dieser Schutz- oder Leitschirm ist, wie auch bei dem vorgenannten Stand der Technik, derart angeordnet, daß er gewährleistet, daß kein Dünger zum Schlepper hin abgeschleudert wird. Des weiteren leitet dieser Schirm im Bereich des Schleppers den Dünger wieder den Schleuderscheiben zu, so daß auch dieser Dünger nach hinten und seitlich abgeschleudert wird. Die Anordnung der Schutz- und Leitschirme im Stand der Technik ist auf den jeweils größten Durchmesser, den die äußeren Teile der längsten Wurfelemente, die einsetzbar sind, beschreiben, ausgelegt. In dieser Position des Leitschirmes und dem Einsatz dieser Schleuderscheiben, mit den Wurfelementen, welche die größten Umlaufbahn beschreiben, erfüllt der Leitschirm seine Funktion in vollem Maße. Diese Funktion ist jedoch nicht mehr in vollem Maße gewährleistet, wenn Schleuderscheiben mit Wurfelementen, deren äußeren Teile eine kleinere Umlaufbahn beschreiben und welche für kleinere Arbeitsbreite vorgesehen sind bestückt sind. Der Abstand zwischen den äußeren Teilen der Wurfelemente und dem Leitschirm ist zu groß, so daß der Leitschirm seine Aufgabe nicht mehr in vollem Umfange herfüllen kann, wenn "kürzere" Wurfelemente eingesetzt werden. Bisher hat man diesen Nachteil bei kleineren Arbeitsbreiten in Kauf genommen. Da nun jedoch in verstärktem Maße die Variationsbreite bei ein und demselben Schleuderstreuer hinsichtlich der Arbeitsweiten von beispielsweise 10 bis 36m und mehr reicht, ist die Inkaufnahme von schlechteren Streubildern bei kleineren Arbeitsbreiten gegenüber möglich besseren Streubildern nicht mehr hinzunehmen.

Der Erfindung liegt daher die Aufgabe zugrunde, eine Systembauweise für Zentrifugaldüngerstreuer vorzuschlagen, um mit derselben Grundrahmenbauweise den Dünger über Arbeitsbreiten von beispielsweise von 10 bis 36m und mehr in gleichmäßiger Weise verteilen zu können.

Diese Aufgabe wird durch die Maßnahme gemäß des Kennzeichens des Patentanspruches 1 gelöst. Infolge dieser Maßnahme läßt sich der Schutz- und/oder Leitschirm jeweils in dem optimalen Abstand oder in einem annähernd optimalen Abstand zur Rotationsachse der Schleuderstreuer, bzgl der eingesetzten Wurfschaufellänge (für die verschiedenen Arbeitsbreitenbereiche, am Rahmen befestigen. Hierbei ist Voraussetzung, daß der Grundrahmen einen derartigen Freiraum im Bereich der Rotationsebene der Schleuderscheiben und der Wurfelemente aufweist, welcher eine derartige Ausdehnung besitzt, die größer ist als der radiale Abstand zwischen der Rotationsachse und den äußeren Teilen des größten, einsetzbaren Wurfelementes für die größte Arbeitsbreite. Der Schutz- und Leitschirm läßt sich dann in einfachster Weise beim Einsatz von Wurfelementen mit kleineren radialen Abständen zur Rotationsachse dichter zur Rotationsachse anordnen, so daß wieder ein optimaler Abstand zwischen den äußeren Teilen der Wurfelemente und dem Schirm gegeben ist.

Die französische Patentschrift 14 00 911 zeigt einen Zentrifugaldüngerstreuer, der auf seiner dem Schlepper zugewandten Seite einen Schutz und Leitschirm aufweist, der fest mit dem Rahmen verbunden ist und immer in dieser einen Position verbleibt. Auf der Rückseite der Maschine ist ein einstellbarer Leitschirm angeordnet. Dieser Leitschirm, der auf der Rückseite der Schleuderscheibe angeordnet ist, ist verstellbar in Langlochführungen angeordnet. Dieser Leitschirm wird zum Einsatz des Schleuderdüngerstreuers zum Reihendüngen benötigt. Dieser Leitschirm kann so eingestellt werden, daß eine optimale Reihendüngung von seitlich sich neben dem Schleuderstreuer befindlichen Reihenkulturen möglich ist. Darüberhinaus sind die Schleuderscheiben bei diesem Düngerstreuer nicht auswechselbar.

Hierbei ist bei einem Zentrifugaldüngerstreuer nach der vorgeschlagenen Systembauweise vorgesehen, daß verschiedene Schirme entsprechend den Rotationsdruckmessern der Wurfelemente vorgsehen sind, die mit entsprechenden Abständen zur Rotationsachse der Schleuderscheiben am Rahmen zu befestigen sind oder der Schirm in verschiedenen Abständen zu der Rotationsachse der Schleuderscheiben am Rahmen angeordnet ist, daß der Schirm mittels lösbarer Verbindungselemente, wie beispielsweise Schraubverbindungen, am Rahmen befestigt ist, und daß der Abstand zwischen dem Rahmen und der Rotationsachse derart bemessen ist, daß Wurfelemente einsetzbar sind, mit denen Arbeitsbreiten bis zu 36m und mehr (wobei die Wurfweite der Düngerpartikel größer ist als die Arbeitsbreite) erreichbar sind. Es sei an dieser Stelle darauf hingewiesen, daß ein und derselbe Schirm mittels der lösbaren Verbindungselemente in unterschiedlichen Positionen am Rahmen angeordnet sein kann. Es ist jedoch auch möglich, daß für die verschiedenen Positionen unterschiedliche Leitschirme, die entsprechend optimal ausgebildet sind, Verwendung finden können. Durch die Erfindung wird also erreicht, daß ein und derselbe Zentrifugaldüngerstreuer nach der Systembauweise für die verschiedenen Arbeitsbreiten mit dem optimalsten Streuergebnis einzusetzen ist. Es ist lediglich erforderlich, beim Einsatz der verschiedenen Schleuderscheiben oder Wurfelemente für die verschiedenen Arbeitsbreiten den Leitschirm auszutauschen und/oder in der entsprechenden Position gemäß der verwendeten Schleuderscheibe zu montieren oder den, einen Kompromiß bildenden Leitschirm entsprechend den verwendeten Wurfelementen in der vorgegebenen Position am Rahmen zu befestigen.

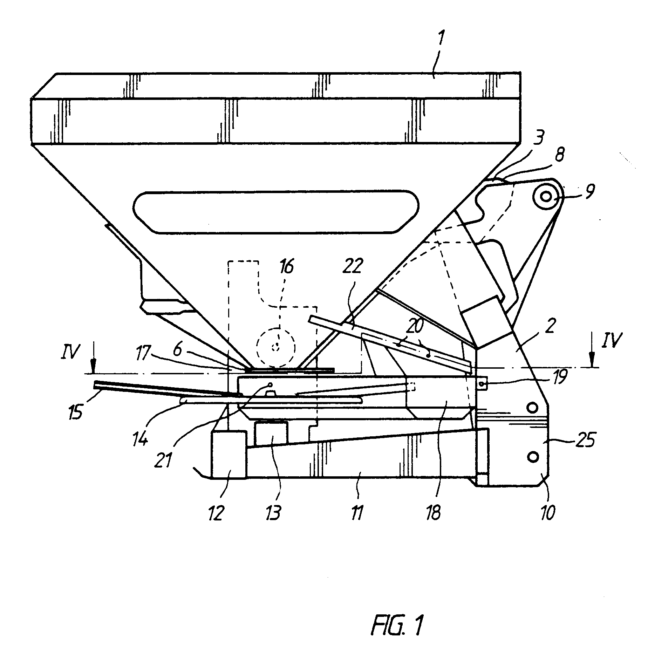

Weitere Einzelheiten der Erfindung sind den übrigen Unteransprüchen, der Beispielsbeschreibung und den Zeichnungen zu entnehmen. Hierbei zeigt
- Fig. 1: den in erfindungsgemäßer Weise ausgebildeten Zentrifugaldüngerstreuer in der Seitenansicht,

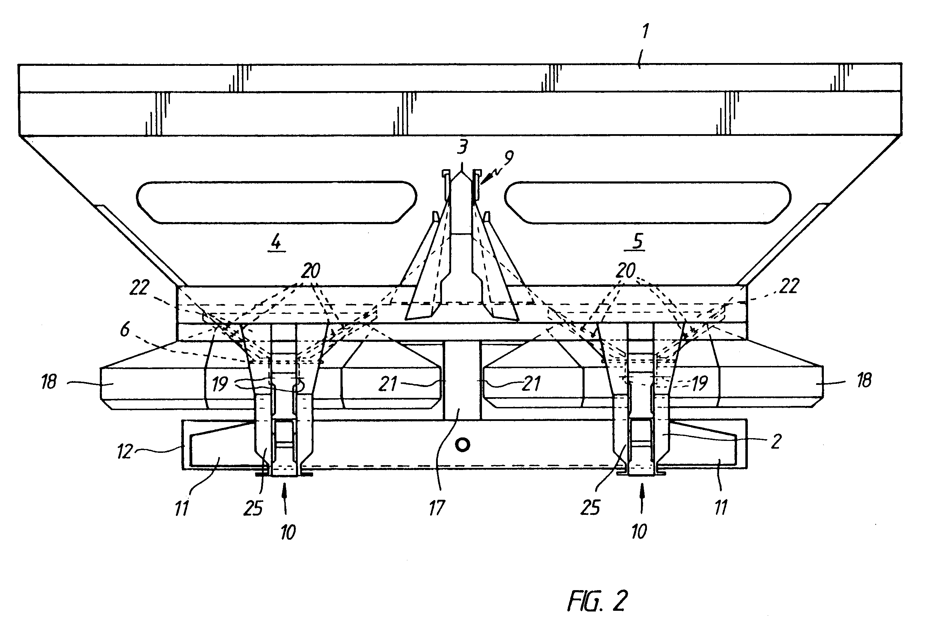

- Fig. 2: den Zentrifugaldüngerstreuer gemäß Fig. 1 in der Ansicht von vorne,

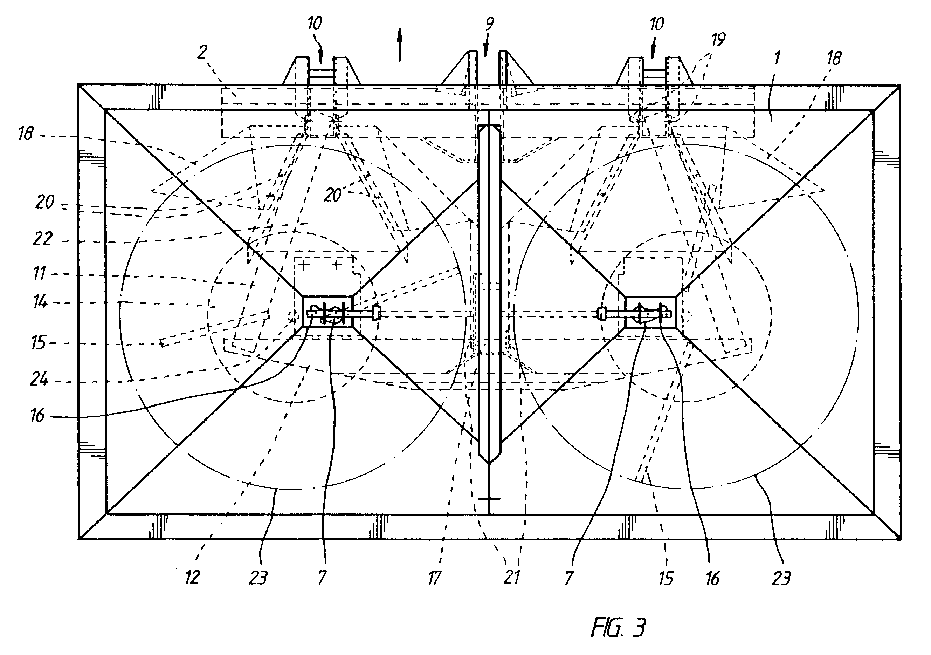

- Fig. 3: den Zentrifugaldüngerstreuer gemäß der Fig. 1 und 2 in der Draufsicht,

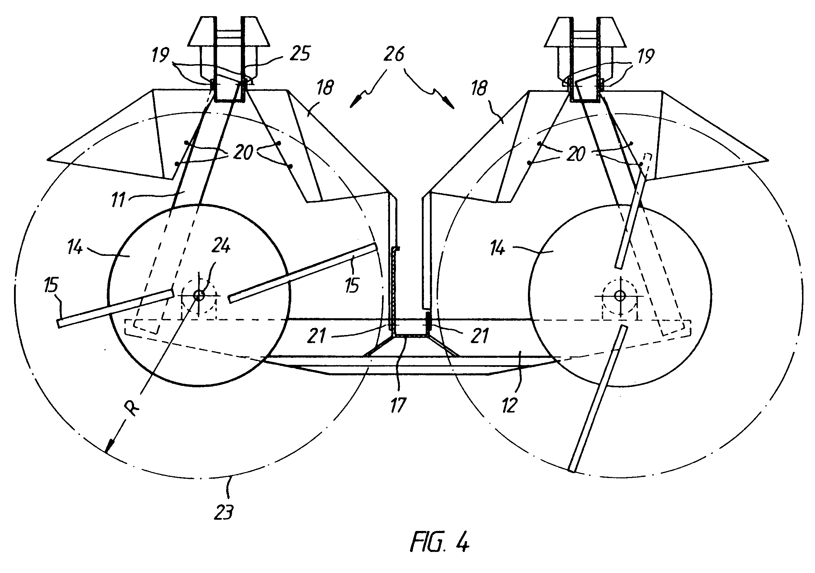

- Fig. 4: der Zentrifugaldüngerstreuer gemäß Fig. 1 in der Ansicht IV - IV und

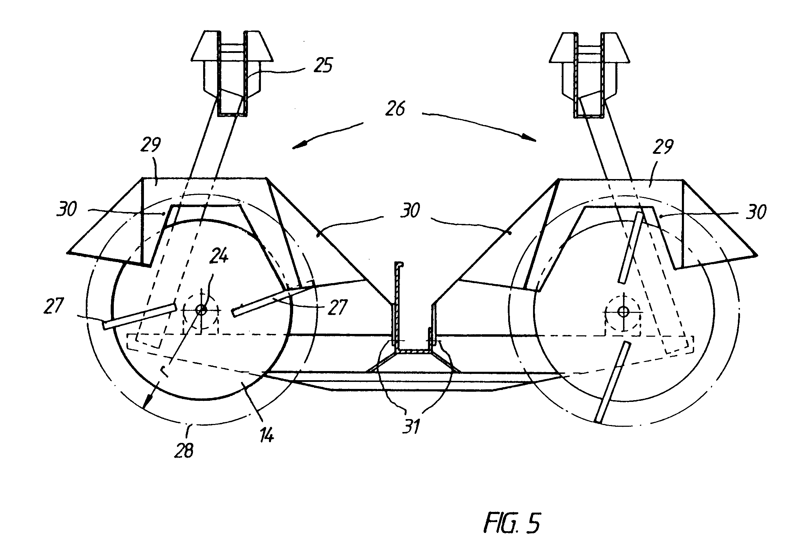

- Fig. 5: Teilansicht des in erfindungsgemäßer Weise ausgerüsteten Zentrifugaldüngerstreuers entsprechend Fig. 4, jedoch mit einem anderen Schutz- und/oder Leitschirm.

Der Zentrifugaldüngerstreuer besteht aus den beiden Bauteilen Vorratsbehälter 1 und Zentralrahmen 2. Der Vorratsbehälter 1 weist die beiden, durch das dachförmige Mittelteil 3 voneinander getrennten Auslauftrichter 4 und 5 auf. Unterhalb jedes Auflauftrichters 4 und 5 ist jeweils die Bodenplatte 6 angeordnet, in welcher sich jeweils die Auslauföffnung 7 befindet, deren Öffnungsweite sich mit Hilfe der sich unterhalb der Bodenplatten 6 befindlichen Schieber in unterschiedlichen Größen einstellen läßt. Das dachförmige Mittelteil 3 ragt nach vorn über den Vorratsbehälter 1 hinaus. An dem vorderen Teil 8 des dachförmigen Mittelteiles 3 ist das Oberlenkeranschlußelement 9 befestigt, während die unteren Anschlußelemente 10 der Dreipunktkupplungselemente an dem Zentralrahmen 2 befestigt sind. An den unteren, nach hinten ragenden Trägern 11 ist die Quertraverse 12 angebracht. An dieser Quertraverse 12 sind wiederum die Getriebe 13 angeordnet, über welche die Schleuderscheiben 14 angetrieben werden. Die Getriebe 13 werden in bekannter und daher nicht näher dargestellter Weise von einem Mittelgetriebe angetrieben, welches über seine Eingangswelle mittels einer nicht näher dargestellte Gelenkwelle mit der Zapfwelle des den Zentrifugaldüngerstreuer transportierenden Ackerschleppers verbunden ist. Die Schleuderscheiben 14 sind jeweils mit den unterschiedlich lang ausgebildeten Wurfelementen 15 bestückt. In dem unteren Bereich der Auslauftrichter 4 und 5 ragt durch die Wand des dachförmigen Mittelteiles 3 jeweils die Rührwelle 16 in den Vorratsbehälter hinein. Die Rührwelle 16 wird über einen nicht näher dargestellten Kettentrieb vom Mittelgetriebe aus angetrieben, wobei sich der Kettentrieb in dem kastenförmig ausgebildeten Kettenschacht 17 befindet. Die Schleuderscheiben 14 sind auf ihrer dem Schlepper zugewandten Seite jeweils von einem Schutz- und/oder Leitschirm umgeben. Dieser Schutz- und/oder Leitschirm 18 weist die Befestigungspunkte 19,20 und 21 auf. Diese Befestigungspunkte 19,20 und 21 sind als lösbare Schraubverbindungen ausgebildet. Hierbei befindet sich der Befestigungspunkt 19 am Zentralrahmen 2, die Befestigungspunkte 20 an der den Zentralrahmen 2 mit dem Vorratsbehälter 1 verbindenden Strebe 22 und der Befestigungspunkt 21 am Kettenschacht 17.

Die auf der Schleuderscheibe 14 angeordneten Wurfelemente 15 weisen die Umlaufbahn 23 auf, deren Radius R von der Rotationsachse 24 sich aus der Länge des längesten, auf der jeweiligen Schleuderscheibe 14 angeordneten Wurfelementes 15 ergibt. Die Umlaufbahn 23 der Wurfelemente 15 der Schleuderscheibe 14 weist einen großen Radius R von der Rotationsachse 24 der Schleuderscheibe 14 auf. Entsprechend dieses großen Rotationsdurchmessers der Wurfelemente 15 ist der Schutz- und/oder Leitschirm 18 in einem entsprechenden Abstand zur Rotationsachse 24 der Schleuderscheiben 14 angeordnet. Mit diesen langen Wurfelementen lassen sich sehr große Arbeitsbreiten von bis zu 36m und mehr erzielen. Der Schutz- und/oder Leitschirm 18 ist hierbei in einem optimalen Abstand zur Rotationsachse 24 der Schleuderscheibe 14 angeordnet, so daß er beim Ausstreuen von Düngemitteln in hervorragender Weise mit den Wurfelementen 15 zusammenwirkt, und die Düngemittelpartikel von jeder Schleuderscheibe 14 in einem genau definierten Streusektor abgeschleudert werden. Hierdurch ist eine gleichmäßige Düngerverteilung über den gesamten Streubereich des Zentrifugaldüngerstreuers gewährleistet, so daß sich eine gleichmäßige Ausbringmenge pro Flächeneinheit ergibt.

Der sich zwischen der Rotationsachse 24 und den aufrechten Tragelementen 25 des Zentralrahmens 2 erstreckende Freiraum 26 ist jeweils nach den größtmöglichen Arbeitsbreiten des Zentrifugaldüngerstreuers ausgelegt, wobei die großen Arbeitsbreiten von bis zum 36m und mehr sich mittels der langen, auf den Schleuderscheiben 14 angeordneten Wurfelementen 15 erreichen lassen.

Soll nun je nach erforderlichen Einsatzverhältnissen der gleiche Zentrifugaldüngerstreuer auch für geringere Arbeitsbreiten eingesetzt werden, lassen sich diese geringeren Arbeitsbreiten des Schleuderdüngerstreuers durch den Einsatz der kürzeren Wurfelemente 27, welche auf der Schleuderscheibe 14 angeordnet sind, erreichen. Diese kürzeren Wurfelemente 27 weisen dann beispielsweise die Umlaufbahn 28 mit dem Radius r zur Rotationsachse 24 der Schleuderscheibe 14 auf. Damit nun das exakte Ausstreuen der Düngemittelpartikel über die mit den Wurfelementen 27 zu erreichende Arbeitsbreite mit einem qualitätvollen Streubild, d.h., mit einer exakten Düngerverteilung pro Flächeneinheit, gewährleistet ist, muß das exakte Zusammenwirken der Wurfelemente 27 mit dem Schutz- und/oder Leitschirm 29 gewährleistet sein. Dieses ist nur möglich, wenn der Schutz- und/oder Leitschirm 29 nur einen sehr geringen Abstand zu den Umlaufbahnen 28 der Wurfelemente 27 der Streuscheibe 14 aufweist. Aus diesem Grunde muß der einen großen Abstand zur Rotationsachse 24 der Schleuderscheibe 14 aufweisende Schutz- und/oder Leitschirm 18 derart in Richtung auf die Rotationsachse 24 versetzt, bzw. gegen den, einen geringeren Abstand zur Rotationsachse 24 aufweisenden Schutz- und/oder Leitschirm 29 ersetzt werden. Der jeweilige Schutz- und/oder Leitschirm 29 ist über die Befestigungspunkte 30 mit der Strebe 22 und mittels des Befestigungspunktes 31 am Kettenschacht 17 befestigt, wobei die Befestigungspunkte als Schraubverbindungen ausgebildet sind.

Der Freiraum 26 zwischen den aufrechten Tragelementen 25 und der jeweiligen Rotationsachse 24 der Schleuderscheiben 14 weist eine derartige Ausdehnung auf, die es erlaubt, mit ein und demselben Zentrifugaldüngerstreuer sowohl kleine als auch sehr große Arbeitsbreiten in exakter Weise, d.h. mit einer guten Streubildqualität für alle verschiedenen Arbeitsbreitenbereiche, zu bestreuen.

## Patentansprüche

1. Zentrifugaldüngerstreuer, insbesondere zum Anbau an den Dreipunktkraftheber eines Ackerschleppers, mit einem Vorratsbehälter (1), einem Rahmen (2) und um aufrechte Achsen angetriebenen und mit Wurfelementen (15,27) besetzten und auswechselbaren Schleuderscheiben (14), welche auf ihrer dem Schlepper zugewandten Seite von einem am Rahmen (2) mittels lösbarer Verbindungselemente (19,20,21,30,36) , wie beispielsweise Schrauben, Schnappverschlüsse etc. angeordneten Schutz- und/oder Leitschirm (18,29) umgeben sind, dadurch gekennzeichnet, daß der Schutz- und/oder Leitschirm (18,29) in zumindest zwei verschiedenen Abständen zur Rotationsachse (24) der Schleuderscheiben (14) am Rahmen (2) zu befestigen ist.

2. Zentrifugaldüngerstreuer nach Anspruche 1, dadurch gekennzeichnet, daß ein oder der Schirm (18,19) in verschiedenen Abständen zu der Rotationsachse (24) der Schleuderscheiben (14) am Rahmen (2) angeordnet ist, daß der Schirm (18,29) mittels lösbarer Verbindungselemente (19,20,21,30,31), wie beispielsweise Schraubverbindungen, am Rahmen (2) befestigt ist, daß der Abstand zwischen dem Rahmen (2,25) und der Rotationsachse (24) derart bemessen ist, daß Wurfelemente (15,27) einsetzbar sind, mit denen Arbeitsbreiten bis zu 36 m und mehr erreichbar sind.

3. Zentrifugaldüngerstreuer nach einem oder mehreren der vorstehenden Ansprüche, dadurch gekennzeichnet, daß der Schirm (18,29) in verschiedenen Abständen zur Rotationsachse (24) der Schleuderscheiben (14) zu befestigen ist.

4. Zentrifugaldüngerstreuer nach Anspruch 1 oder 2, dadurch gekennzeichnet, daß entsprechend den Rotationsdurchmessern der Wurfelemente (15,27) verschiedene Schirme (18,29) vorgesehen sind, die mit entsprechenden Abständen zur Rotationsachse (24) der Schleuderscheiben (14) am Rahmen (2) zu befestigen sind.

5. Zentrifugaldüngerstreuer nach einem oder mehreren der vorstehenden Ansprüche, dadurch gekennzeichnet, daß der Abstand in die Rotationsebene der Schleuderscheiben (14) und/ oder Wurfelementen (15,27) zwischen der Rotationsachse (24) und dem aufrechten Rahmenteil (25) so ausgelegt ist, daß Wurfelemente (15), mit denen Arbeitsbreiten bis zu 36 m und mehr erzielbar sind, einsetzbar sind und andere Wurfelemente (27), mit denen geringere Arbeitsbreiten erzielbar sind, wobei bei geringeren Arbeitsbreiten der entsprechende Schirm (29) in kleinerem Abstand zur Rotationsachse (24) montierbar ist, als der Leitschirm (18) bei größeren Arbeitsbreiten.

## Claims

1. Centrifugal fertiliser spreader, more especially for attachment to the three-point hydraulic lift of a tractor, including a hopper (1), a frame (2) and changeable centrifugal discs (14), which are driven about upwardly extending axes and are provided with throwing members (15, 27), said discs being surrounded, on their side facing the tractor, by a protective and/or deflector screen (18, 29), which is disposed on the frame (2) by means of detachable connecting members (19, 20, 21, 30, 31), such as screws, snap closures, etc., for example, characterised in that the protective and/or deflector screen (18, 29) is mountable on the frame (2) at at least two different spacings relative to the rotary axis (24) of the centrifugal discs (14).

2. Centrifugal fertilizer spreader according to claim 1, characterised in that a screen or the screen (18, 29) is disposed on the frame (2) at different spacings relative to the rotary axis (24) of the centrifugal discs (14), in that the screen (18, 29) is mounted on the frame (2) by means of detachable connecting members (19, 20, 21, 30, 31), such as screw connections, for example, and in that the spacing between the frame (2, 25) and the rotary axis (24) is of such dimensions that throwing members (15, 27) are utilisable, by means of which members working widths of up to 36 m and more are attainable.

3. Centrifugal fertiliser spreader according to one or more of the preceding claims, characterised in that the screen (18, 29) is to be mounted at different spacings relative to the rotary axis (24) of the centrifugal discs (14).

4. Centrifugal fertiliser spreader according to claim 1 or 2, characterised in that different screens (18, 29) are provided according to the diameters of rotation of the throwing members (15, 27), which screens are to be mounted on the frame (2) at corresponding spacings relative to the rotary axis (24) of the centrifugal discs (14).

5. Centrifugal fertiliser spreader according to one or more of the preceding claims, characterised in that the spacing into the rotary plane of the centrifugal discs (14) and/or throwing members (15, 27) between the rotary axis (24) and the upwardly extending frame portion (25) is such that throwing members (15) are utilisable, by means of which members working widths of up to 36 m and more are attainable, and other throwing members (27) are utilisable, by means of which smaller working widths are attainable, whereby, for smaller working widths, the appropriate screen (29) is mountable at a smaller spacing relative to the rotary axis (24) than the deflector screen (18) for greater working widths.

## Revendications

1. Distributeur centrifuge d'engrais notamment destiné à être monté sur le dispositif de levage en trois points d'un tracteur agricole, comprenant un réservoir d'alimentation (1), un châssis (2) et des disques d'épandage (14) interchangeables, équipés d'éléments d'éjection (15, 27), ces disques étant montés sur des axes verticaux, entraînés, ces disques étant entourés sur leur côté tourné vers le tracteur par un écran de protection et/ou de guidage (18, 29) porté par le châssis (2) avec des éléments de liaison amovibles (19, 20, 21, 30, 31) tels que par exemple des vis, des liaisons à encliquetage, ou autres, distributeur caractérisé en ce que l'écran de protection et/ou de guidage (18, 29) peut être fixé à au moins deux distances différentes par rapport à l'axe de rotation (24) des disques d'épandage (14) sur le châssis (2).

2. Distributeur centrifuge d'engrais selon la revendication 1, caractérisé en ce que l'écran (18, 19) peut être fixé à des intervalles différents de l'axe de rotation (24) des disques d'épandage (14) sur le châssis (2), l'écran (18, 29) étant fixé au châssis (2) à l'aide d'éléments de liaison amovibles (19, 20, 21, 30, 31) tels que par exemple des liaisons à vis, la distance entre le châssis (2, 25) et l'axe de rotation (24) étant dimensionnée pour permettre d'utiliser des éléments d'éjection (15, 27) assurant des largeurs de travail allant jusqu'à 36 mètres et dépassant ces largeurs.

3. Distributeur centrifuge d'engrais selon une ou plusieurs des revendications précédentes, caractérisé en ce que l'écran (18, 29) peut être fixé à des distances différentes de l'axe de rotation (24) des disques d'épandage (14).

4. Distributeur centrifuge d'engrais selon la revendication 1 ou 2, caractérisé en ce qu'en fonction du diamètre de rotation des éléments d'éjection (15, 27) on a différents écrans (18, 29) fixés à des distances correspondantes de l'axe de rotation (24) des disques d'épandage (14) sur le châssis (2).

5. Distributeur centrifuge d'engrais selon l'une ou plusieurs des revendications précédentes, caractérisé en ce que la distance dans le plan de rotation des disques d'épandage (14) et/ou des éléments d'éjection (15, 27) entre l'axe de rotation (24) et la partie montante (25) du châssis est telle que des éléments d'éjection (15) de 36 mètres et plus, puisse s'utiliser ainsi que d'autres éléments d'éjection (27) pour des largeurs de travail plus faibles, et en cas de largeurs de travail plus faibles, l'écran correspondant (29) se monte à une distance plus faible de l'axe de rotation (24) que l'écran de guidage (18) pour les largeurs de travail plus grandes.
